# EUROPÄISCHE PATENTSCHRIFT

(11) **EP 3 394 363 B1**
(45) Veröffentlichungstag und Bekanntmachung des Hinweises auf die Patenterteilung: **07.04.2021**
(21) Anmeldenummer: 16825721.0
(22) Anmeldetag: 16.12.2016
(51) Int. Cl.: C08L 23/08, E04F 15/10

(54) **BODENBELAG ENTHALTEND THERMOPLASTISCHES ELASTOMER SOWIE VERFAHREN ZU DESSEN HERSTELLUNG**
FLOOR COVERING CONTAINING THERMOPLASTIC ELASTOMER AND METHOD FOR PRODUCING SAME
REVÊTEMENT DE SOL CONTENANT UN ELASTOMER THERMOPLASTIQUE ET MÉTHODE DE RÉALISATION

(30) Priorität: 22.12.2015 DE 102015122532
(43) Veröffentlichungstag der Anmeldung: 31.10.2018
(73) Patentinhaber: Nora Systems GmbH, 69469 Weinheim (DE)
(72) Erfinder: ADAMETZ, Paul, 68305 Mannheim (DE); SCHÜLE, Hanna, 64646 Heppenheim (DE); KRÖGER, Mario, 76646 Bruchsal (DE)
(74) Vertreter: Reiser & Partner Patentanwälte mbB
(86) Internationale Anmeldenummer: PCT/EP2016/081492
(87) Internationale Veröffentlichungsnummer: WO 2017/108621

(56) Entgegenhaltungen:
- WO-A1-93/20146
- WO-A1-2011/063849
- WO-A1-2012/017235
- JP-A- 2002 276 141
- US-A1- 2006 059 825

## Beschreibung

Die vorliegende Erfindung betrifft einen Bodenbelag enthaltend eine Polymerzusammensetzung, die eine Mischung einer Komponente A, einer Komponente B und einer Komponente C umfasst, wobei die Komponente A ein Olefin-basiertes Polymer umfasst, wobei die Komponente B ein Polymer umfasst und wobei die Komponente C ein styrolbasiertes thermoplastisches Elastomer umfasst. Die Erfindung betrifft darüber hinaus ein Verfahren zur Herstellung eines solchen Bodenbelags.

Bodenbeläge enthaltend thermoplastische Elastomere sind bekannt. Beispielsweise geht aus der EP 1 793 032 B1 ein Bodenbelag hervor, der eine Mischung von drei Polymeren umfasst. Dabei werden auch unterschiedliche thermoplastische Elastomere als Bestandteil der Mischung vorgeschlagen. Hierbei werden auch thermoplastische Elastomere auf Styrolbasis erwähnt.

Ein thermoplastischer Bodenbelag ist aus der WO 2011/063849 A1 bekannt. Der hierin beschriebene Bodenbelag weist eine Polymermatrix auf, die ein Olefin-basiertes Polymer und ein Polymer mit Säureanhydridgruppen aufweist. Das Olefin-basierte Polymer kann dabei ein Olefin-basiertes Elastomer sein.

Aus der WO 2014/005631 A1 ist ein PVC-freier Bodenbelag mit mehreren Schichten bekannt. Der Bodenbelag weist eine thermoplastische Mischung auf, die ein Olefin-basiertes Polymer, ein Anhydrid-Copolymer sowie einen Füllstoff aufweist.

Aus der JP2002276141 ist ein Bodenbelag bekannt, der eine Mischung eines härteren Polyethylen-Polymers, eines weicheren Polyethylen-Polymers und eines thermoplastischen Elastomers enthält.

Die US 2006/059825 A1 beschreibt ein doppelseitiges Klebeband zum Verbinden von Baumaterialien. Dabei kann eine Klebstoffschicht vorgesehen sein, die SIS, SBS oder SEBS enthält.

Versuche haben ergeben, dass die bekannten Bodenbeläge bei einer Verklebung mit dem Unterboden noch keine zufriedenstellenden Festigkeitswerte aufweisen.

Die Erfindung stellt sich daher die Aufgabe, einen Bodenbelag enthaltend ein thermoplastisches Elastomer anzugeben, der bei einer Verklebung mit dem Unterboden gute Festigkeitswerte und gleichzeitig eine gute mechanische Widerstandsfähigkeit aufweist. Darüber hinaus stellt sich die Erfindung die Aufgabe, ein Verfahren zur Herstellung eines solchen Bodenbelags anzugeben.

Die Aufgabe wird bei einem eingangs genannten Bodenbelag mit den Merkmalen von Anspruch 1 gelöst. Demnach ist ein Bodenbelag vorgesehen enthaltend eine Polymerzusammensetzung, die eine
Mischung einer Komponente A, einer Komponente B und einer Komponente C umfasst, wobei die Komponente A ein Olefin-basiertes Polymer umfasst, wobei die Komponente B ein Polymer umfasst, das Säuregruppen und/oder Anhydridgruppen umfasst, und wobei die Komponente C ein styrolbasiertes thermoplastisches Elastomer umfasst, wobei weiterhin das styrolbasierte thermoplastische
Elastomer eine Hartphase und eine Weichphase aufweist und wobei die Weichphase eine Glasübergangstemperatur T_{G} aufweist, die bei minus 50°C oder höher liegt.

Eine bevorzugte Ausführungsform sieht vor, dass das Polymer der Komponente B Säuregruppen und/oder Anhydridgruppen umfasst, die auf das Polymer gepfropft sind.

Es hat sich gezeigt, dass auf diese Weise ein elastischer Bodenbelag erhalten werden kann, der bei einer Verklebung gute Festigkeitswerte, insbesondere eine gute Schälfestigkeit, aufweist. Darüber hinaus weist der Bodenbelag auch eine gute mechanische und chemische Widerstandsfähigkeit auf. Der Bodenbelag ist insbesondere widerstandsfähig gegen Verschleiß und hat eine gute Abriebfestigkeit. Insbesondere kann ein solcher Bodenbelag auch unter erhöhten Beanspruchungen verwendet werden, wie sie in öffentlichen Gebäuden vorliegen. Der Bodenbelag ist leicht zu verlegen und leicht zu reinigen. Zudem ist er maßbeständig und beständig gegen Zigarettenglut. Die Belastung durch Emissionen ist sehr gering. Der Bodenbelag ist zudem farbbeständig.

Die Aufgabe wird bei einem Verfahren mit den Merkmalen von Anspruch 13 gelöst. Das Verfahren weist zur Herstellung eines Bodenbelags folgende Schritte auf:
- Bereitstellen einer Komponente A, einer Komponente B und einer Komponente C, wobei die Komponente A ein Olefin-basiertes Polymer umfasst, wobei die Komponente B ein Polymer umfasst, bei dem Säuregruppen und/oder Anhydridgruppen auf das Polymer gepfropft sind und wobei die Komponente C ein styrolbasiertes thermoplastisches Elastomer umfasst, wobei das styrolbasierte thermoplastische Elastomer eine Hartphase und eine Weichphase aufweist und wobei die Weichphase eine Glasübergangtemperatur T_{G} aufweist, die bei minus 50°C oder höher liegt;
- Herstellen einer Polymerzusammensetzung durch Mischen der Komponente A, der Komponente B und der Komponente C in einem Mischer;
- Umformen der Polymerzusammensetzung zu einem Flächengebilde.

Das Verfahren ermöglicht die Herstellung eines hochwertigen Bodenbelags, der gute Klebeeigenschaften aufweist und darüber hinaus resistent gegenüber Abnutzung und Alterung ist. Darüber hinaus ist die Herstellung sicher und kostengünstig möglich. Zudem weisen die Bodenbeläge keine oder nur wenige Blasen auf.

Nachfolgend werden weitere Merkmale der Erfindung beschrieben. Die Merkmale beziehen sich dabei sowohl auf den Bodenbelag als auch das Verfahren zur Herstellung.

Die Erfindung sieht vor, dass das styrolbasierte thermoplastische Elastomer eine Hartphase und eine Weichphase aufweist und dass die Weichphase eine Glasübergangstemperatur T_{G} aufweist, die bei minus 50°C oder höher liegt. Diese Maßnahmen tragen zu guten Klebeeigenschaften des Bodenbelags und einer hohen Stabilität bei. Die Weichphase bestimmt insbesondere die kautschukelastischen Eigenschaften der Komponente C. Die Hartphase ist insbesondere für die Formbeständigkeit und die Festigkeit des Materials verantwortlich. Die Hartphase ist zudem für die thermoplastischen Eigenschaften des thermoplastischen Elastomers maßgeblich. Vorzugsweise liegt die Glasübergangstemperatur T_{G} der Weichphase bei mehr als minus 40°C. Weiterhin ist bevorzugt, dass die Glasübergangstemperatur T_{G} der Weichphase unter plus 10°C liegt. Besonders bevorzugt liegt die Glasübergangstemperatur T_{G} der Weichphase zwischen minus 15°C und plus 10°C. Die Hartphase weist in bevorzugter Weise eine Glasübergangstemperatur T_{GH} auf, die bei über plus 90°C liegt. Die Komponente C kann insbesondere ein Blockcopolymer umfassen, wobei wenigstens ein Block die Weichphase und wenigstens ein weiterer Block die Hartphase bildet. Beispielsweise bildet bei SBS das Styrol die Hartphase, während das Butadien die Weichphase bildet. Bei SEBS bildet das Styrol die Hartphase, während das Ethylen-Butylen die Weichphase bildet. Bei SIS bildet das Styrol die Hartphase und das Isopren die Weichphase. Die Glasübergangstemperaturen werden mit der Dynamischen Differenz-Thermoanalyse nach der DIN EN ISO 11357-2 in der am 1. Juli 2015 gültigen Fassung bestimmt. Die in der vorliegenden Anmeldung genannten Werte sind jeweils nach dem Halbstufenhöhenverfahren ermittelt.

Eine bevorzugte Ausgestaltung sieht vor, dass die Komponente C ein 1,2-verknüpftes, vinyl-ständig eingebautes Isoprenmonomer umfasst. Hierbei können besonders vorteilhafte Ergebnisse erzielt werden. Dies gilt insbesondere auch dann, wenn der Styrolgehalt der Komponente C in dem Bereich zwischen 15 und 40 Gew% liegt. Vorzugsweise sind mehr als 30% der Isoprenmonomere 1,2-verknüpft vinylständig eingebaut. Besonders bevorzugt sind mehr als 50% der Isoprenmonomere 1,2-verknüpft vinylständig eingebaut. Als besonders vorteilhaft hat sich in bestimmten Fällen erwiesen, wenn mehr als 70% der Isoprenmonomere 1,2-verknüpft vinylständig eingebaut sind. Insbesondere kann das 1,2-verknüpfte Isoprenmonomer Teil der Weichphase sein. Diese Maßnahmen tragen zu guten Klebeeigenschaften des Bodenbelags und einer hohen Stabilität bei. Zudem ermöglichen sie, eine Glasübergangstemperatur T_{G} der Weichphase in dem bevorzugten Bereich zu erhalten.

In vorteilhafter Weise kann vorgesehen sein, dass die Weichphase der Komponente C Styrol umfasst. Vorzugweise kann die Weichphase einen Styrol/Butadien-Block umfassen. Dies kann beispielsweise der Fall sein, wenn die Komponente C ein SBS der Struktur S-(S/B)-S umfasst, wobei S für einen Polystyrolblock und S/B für einen Styrol/Butadien-Copolymerblock steht. Vorzugsweise liegt der Styrolgehalt der Weichphase bei mehr als 30 Gew% bezogen auf die Weichphase. Vorzugsweise besteht der Styrol-Butadien-Block (S/B) aus 15 bis 70 Gew% Styrol und 30 bis 85 Gew% Butadien. Diese Maßnahmen tragen zu guten Klebeeigenschaften des Bodenbelags und einer hohen Stabilität bei.

Eine weitere Verbesserung sieht vor, dass die Komponente C einen Styrolgehalt zwischen 15 Gew% und 80 Gew% aufweist. Vorzugsweise liegt der Styrolgehalt dabei bei mehr als 30 Gew%. Besonders bevorzugt ist dabei ein Styrolgehalt der Komponente C von mehr als 40 Gew%. Dies trägt zu guten Klebeeigenschaften des Bodenbelags und einer hohen Stabilität bei.

Eine bevorzugte Ausgestaltung der Erfindung sieht vor, dass das styrolbasierte thermoplastische Elastomer der Komponente C wenigstens eine Verbindung aus der Gruppe bestehend aus Styrol-Butadien-Styrol-Block-Copolymer (SBS), Styrol-Isopren-Styrol-Block-Copolymer (SIS), Styrol-Ethylen-Butylen-Styrol-Blockcopolymer (SEBS) und Styrol-Ethylen-Propylen-Styrol-Blockcopolymer (SEPS) umfasst. Dies trägt zu guten Klebeeigenschaften sowie einer guten mechanischen Stabilität bei. Besonders bevorzugt werden dabei SIS, SBS oder SEBS sowie Mischungen hiervon. SBS kann insbesondere vorliegen als Poly(Styrol-b-Butadien-b-Styrol). Das SIS kann insbesondere vorliegen als Poly(Styrol-b-Isopren-b-Styrol). Das SEBS kann insbesondere vorliegen als Poly(Styrol-b-Ethylen-Butadien-b-Styrol). Das SEPS kann insbesondere vorliegen als Poly(Styrol-b-Ethylen-Propylen-b-Styrol).

In vorteilhafter Weise umfasst das styrolbasierte thermoplastische Elastomer der Komponente C ein Block-Copolymer. Die Hartphase und die Weichphase liegen dann in einem Molekül vor. Auch dies trägt zu guten Klebeeigenschaften des Bodenbelags und einer hohen Stabilität bei.

Eine weitere vorteilhafte Ausgestaltung sieht vor, dass das styrolbasierte thermoplastische Elastomer der Komponente C einen Anteil an Diblock-Copolymer umfasst. Auch dies trägt zu guten Klebeeigenschaften des Bodenbelags und einer hohen Stabilität bei. Vorzugsweise umfasst das styrolbasierte thermoplastische Elastomer einen Anteil an Polystyrol-Diblock-Copolymer. Bevorzugt ist, wenn der Diblock-Anteil bezogen auf die Komponente C mehr als 5% und besonders bevorzugt mehr als 10% beträgt. Besonders gute Eigenschaften ergeben sich bei einem Diblock-Anteil bezogen auf die Komponente C von mehr als 15%. In vorteilhafter Weise ist der Diblock-Anteil bezogen auf die Komponente C kleiner als 75%.

In vorteilhafter Weise ist vorgesehen, dass das styrolbasierte thermoplastische Elastomer der Komponente C eine Tri-Block Struktur S-X-S aufweist, wobei S ein Styrolblock ist und X ein Block mit bei 20°C elastomeren Eigenschaften. Vorzugsweise stellt der Styrolblock bei 20°C einen glasartigen oder kristallinen Block dar, der bei höheren Temperaturen aufschmilzt. Diese Maßnahmen tragen zu guten Klebeeigenschaften des Bodenbelags und einer hohen Stabilität bei. Hierbei können der Block X die Weichphase und die Styrolblöcke S die Hartphase des thermoplastischen Elastomers bilden.

Eine vorteilhafte Ausgestaltung der Erfindung sieht vor, dass die Komponente A wenigstens ein Olefin-basiertes Polymer umfasst, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Ethylen-Propylen-Copolymer (EPM), Very-Low-Density Polyethylen (VLDPE), Linear Low-Density Polyethylen (LLDPE), Polyolefin-Elastomer (POE), Polyethylen (PE), Polypropylen (PP), Low-Density Polyethylen (LDPE) und Polyolefin Plastomer (POP). VLDPE weist eine Dichte zwischen 0,880 g/cm³ und 0,915 g/cm³ auf. LLDPE weist eine Dichte zwischen 0,915 g/cm³ und 0,925 g/cm³ auf. LDPE weist eine Dichte zwischen 0,915 g/cm³ und 0,935 g/cm³ auf. Erfindungsgemäß besonders bevorzugt sind VLDPE, EVA oder POE sowie Mischungen hiervon. Mit diesen Maßnahmen können besonders gute Klebeeigenschaften des Bodenbelags sowie eine hohe mechanische Stabilität erreicht werden.

Eine weitere vorteilhafte Ausgestaltung der Erfindung sieht vor, dass das von der Komponenten B umfasste Polymer ein Polymer auf Ethylenbasis ist. Bevorzugt umfasst die Komponente B Polyethylen (PE), Low-Density Polyethylen (LDPE) oder Ethylen-Vinylacetat (EVA) oder Mischungen hiervon. Dies trägt insbesondere zu einer guten mechanischen Stabilität bei guten Klebeeigenschaften des Bodenbelags bei. LDPE weist eine Dichte zwischen 0,915 g/cm³ und 0,935 g/cm³ auf.

Nach einer weiteren bevorzugten Ausgestaltung der Erfindung ist vorgesehen, dass die Komponente B Styrol-Ethylen-Butylen-Styrol-Blockcopolymer (SEBS) umfasst.

Besonders gute Klebeeigenschaften des Bodenbelags ergeben sich auch dadurch, dass das von der Komponente B umfasste Polymer Maleinsäureanhydrid-Gruppen und/oder Acrylsäure-Gruppen aufweist. Vorzugsweise sind die Maleinsäureanhydrid-Gruppen und/oder die Acrylsäuregruppen auf das Polymer gepfropft. Hierdurch werden besonders gute Klebeeigenschaften und eine hohe mechanische Stabilität des Bodenbelags erreicht. Zudem ist die Herstellung einfach und die Prozesssicherheit hoch.

Eine vorteilhafte Ausgestaltung sieht vor, dass die Komponente B ein Polymer umfasst, das mit dem Olefin-basierten Polymer der Komponente A und/oder mit dem styrolbasierten thermoplastischen Elastomer der Komponente C übereinstimmt. Dies trägt zu guten Klebeeigenschaften des Bodenbelags und einer hohen Stabilität bei.

Eine weitere vorteilhafte Ausgestaltung sieht vor, dass bei der Komponente B die auf das Polymer gepfropften Säuregruppen und/oder Anhydridgruppen mehr als 1 Gew% der Komponente B ausmachen. Besonders bevorzugt ist dabei, wenn die Säuregruppen und/oder Anhydridgruppen mehr als 1,5 Gew% und insbesondere mehr als 2 Gew% ausmachen. Dabei ist bevorzugt, wenn die Säuregruppen und/oder Anhydridgruppen weniger als 8 Gew% ausmachen. Besonders gute Eigenschaften lassen sich erreichen, wenn die Säuregruppen mehr als 5 Gew% ausmachen. Das gilt insbesondere dann, wenn die Säuregruppen Acrylsäuregruppen umfassen. Die genannten Pfropfungsgrade tragen zu guten Klebeeigenschaften des Bodenbelags und einer hohen Stabilität bei.

Eine weitere Verbesserung kann dadurch erreicht werden, dass die Polymerzusammensetzung einen Füllstoff aufweist. Vorzugsweise umfasst der Füllstoff wenigstens einen Stoff ausgewählt aus der Gruppe bestehend aus Kreide, Kieselsäure, Kieselerde, Aluminiumhydroxid, Kaolin, Natrium-Aluminiumsilikat, Glasmehl und Holzmehl. Erfindungsgemäß besonders bevorzugt ist, wenn der Füllstoff Kreide umfasst. Vorzugsweise ist der Füllstoff in der Polymerzusammensetzung mit einem Gewichtsanteil zwischen 50 und 500 bezogen auf Gesamtmenge der Komponenten A, B und C in der Polymerzusammensetzung enthalten. Besonders bevorzugt ist, wenn der vorgenannte Gewichtsanteil zwischen 150 und 300 liegt,

In vorteilhafter Weise umfasst die Polymerzusammensetzung Verarbeitungshilfsmittel. Vorzugsweise kann das Verarbeitungshilfsmittel Stearinsäure und/oder ein Harz, insb. ein Kohlenwasserstoffharz, umfassen. Das Verarbeitungshilfsmittel kann in der Polymerzusammensetzung insbesondere mit einem Gewichtsanteil zwischen 2 und 20 bezogen auf die Gesamtmenge der Komponenten A, B und C in der Polymerzusammensetzung vorgesehen sein.

Die Angaben zu Gewichtsanteilen von Bestandteilen der Polymerzusammensetzung beziehen sich, sofern nicht anders angegeben, jeweils auf die Summe der Komponenten A, B und C in der Polymerzusammensetzung, welche zusammen 100 Gewichtsanteile ausmachen.

Vorzugsweise umfasst die Polymerzusammensetzung ein Öl. Besonders bevorzugt ist das Öl ein synthetisches Öl. Das Öl kann in der Polymerzusammensetzung insbesondere mit einem Gewichtsanteil zwischen 2 und 50 bezogen auf die Gesamtmenge der Komponenten A, B und C vorgesehen sein. Das Öl trägt dazu bei, die Produkteigenschaften zu verbessern und die Verarbeitung zu erleichtern.

Vorzugsweise umfasst die Polymerzusammensetzung ein Alterungsschutzmittel.

Vorzugsweise umfasst die Polymerzusammensetzung ein Farbmittel. Vorzugsweise enthält das Farbmittel anorganische und/oder organische Pigmente. Das Farbmittel kann in der Polymerzusammensetzung insbesondere mit einem Gewichtsanteil zwischen 1 und 40 bezogen auf die Gesamtmenge der Komponenten A, B und C in der Polymerzusammensetzung vorgesehen sein.

Eine vorteilhafte Ausgestaltung sieht vor, dass der Bodenbelag als ein Flächengebilde ausgebildet ist, das eine Nutzseite und eine Rückseite aufweist. Die Rückseite wird beim Verlegen auf einen Unterboden aufgebracht. Insbesondere kann die Rückseite mit dem Unterboden verklebt werden. Das Flächengebilde weist eine Länge und eine Breite auf, die jeweils ein Vielfaches der Dicke des Flächengebildes betragen. Das Flächengebilde kann beispielsweise zu Rollen gerollt werden. Das Flächengebilde kann zudem als Fliesen vorliegen.

Vorzugsweise weist der Bodenbelag wenigstens eine Schicht, welche die Polymerzusammensetzung enthält, und wenigstens eine weitere Schicht auf. Die Schicht mit der Polymerzusammensetzung kann dabei eine Tragschicht des Bodenbelags ausbilden. Vorzugsweise wird bei der Herstellung die wenigstens eine weitere Schicht auf das Flächengebilde aufgebracht.

Eine Weiterbildung dieses Erfindungsgedankens sieht vor, dass die wenigstens eine weitere Schicht eine an der Nutzseite befestigte Deckschicht umfasst. Die Deckschicht kann insbesondere eine Folie aus Kunststoff umfassen. Die Deckschicht kann dabei eine Verschleißschicht des Bodenbelags bilden. Die Deckschicht kann auf die Tragschicht aufkaschiert sein. Vorzugsweise ist die Deckschicht transparent. Besonders bevorzugt ist, wenn die Deckschicht eine transparente lonomer-Folie ist. Insbesondere kann die Folie mit einer Adhäsionsschicht versehen sein. Das Verbinden der mit der Adhäsionsschicht versehenen Folie und der Tragschicht kann durch Auflaminieren unter Zufuhr von Wärme und Druck erfolgen. Vorzugsweise umfasst die Adhäsionsschicht wenigstens ein Olefin-basiertes Polymer, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Ethylen-Propylen-Copolymer (EPM), Very-Low-Density Polyethylen (VLDPE), Linear Low-Density Polyethylene (LLDPE), Polyolefin-Elastomer (POE) und Polyolefin Plastomer (POP).

Eine vorteilhafte Ausgestaltung sieht vor, dass die wenigstens eine weitere Schicht eine an der Rückseite der Tragschicht aufgebrachte Klebeschicht umfasst. Der Klebstoff kann dabei insbesondere vorab aufgebracht sein.

In vorteilhafter Weise ist die Klebeschicht mit einer abziehbaren Abdeckung versehen ist. Auf diese Weise kann der mit einer Klebeschicht versehene Bodenbelag problemlos vorab hergestellt und gelagert werden. Beim Verlegen wird die Abdeckung entfernt und der Bodenbelag kann mit einem Unterboden verklebt werden.

Vorzugsweise beträgt eine Dicke des Bodenbelags zwischen 1 mm und 10 mm.

Eine bevorzugte Ausgestaltung sieht vor, dass die Komponenten A, B und C untereinander mischbar sind.

Erfindungsgemäß ist bevorzugt, dass die Komponente A zwischen 10 und 85 Gewichtsanteile bezogen auf die Summe der Komponenten A, B und C in der Polymerzusammensetzung ausmacht. Vorzugsweise macht die Komponente A zwischen 20 und 70 Gewichtsanteilen aus. Dies trägt zu guten Klebeeigenschaften des Bodenbelags und einer hohen Stabilität bei. Besonders bevorzugt macht die Komponente A zwischen 30 und 50 Gewichtsanteilen aus.

Vorzugsweise macht die Komponente B zwischen 1 und 40 Gewichtsanteile bezogen auf die Summe der Komponenten A, B und C in der Polymerzusammensetzung aus. Besonders bevorzugt macht die Komponente B zwischen 5 und 25 Gewichtsanteilen aus. Dies trägt zu guten Klebeeigenschaften des Bodenbelags und einer hohen Stabilität bei. Besonders bevorzugt macht die Komponente B zwischen 10 und 20 Gewichtsanteilen aus.

Vorzugsweise macht die Komponente C zwischen 10 und 85 Gewichtsanteile bezogen auf die Summe der Komponenten A, B und C in der Polymerzusammensetzung aus. Besonders bevorzugt macht die Komponente C zwischen 30 und 70 Gewichtsanteilen aus. Dies trägt zu guten Klebeeigenschaften des Bodenbelags und einer hohen Stabilität bei. Besonders bevorzugt macht die Komponente C zwischen 40 und 60 Gewichtsanteilen aus.

Eine bevorzugte Ausgestaltung der Erfindung sieht vor, dass die Dichte der Polymerzusammensetzung zwischen 0,95 g/cm³ und 2,5 g/cm³ liegt. Dies trägt zu guten Klebeeigenschaften des Bodenbelags und einer hohen Stabilität bei. Die vorgenannten Dichten werden dabei unter anderem dadurch erhalten, dass die Polymerzusammensetzung Füllstoffe enthält. Vorzugsweise enthält die Polymerzusammensetzung keine chlorhaltigen und/oder halogenhaltigen Verbindungen. Vorzugsweise ist die Polymerzusammensetzung frei von Polyvinylchlorid (PVC).

Vorzugsweise weist der Bodenbelag eine Zugfestigkeit von mehr als 5 N/mm² auf. Besonders bevorzugt ist eine Zugfestigkeit von mehr als 7,5 N/mm².

Vorzugsweise weist der Bodenbelag eine Reißdehnung von mehr als 25% auf. Besonders bevorzugt liegt die Reißdehnung bei mehr als 50%. Zugfestigkeit und Reißdehnung werden im Zugversuch nach der DIN 53504 (in der am 1. Juli 2015 gültigen Fassung) an R1 -Prüfkörpern bei 23°C ermittelt.

Vorzugsweise weist der Bodenbelag einen Weiterreißwiderstand von mehr als 25 N/mm auf. Besonders bevorzugt liegt der Weiterreißwiderstand bei mehr als 35 N/mm. Der Weiterreißwiderstand kann nach ISO 34-1 Verfahren B Arbeitsweise A (in der am 1. Juli 2015 gültigen Fassung) ermittelt werden.

Vorzugsweise liegt die Härte Shore D des Bodenbelags zwischen 35 und 60. Besonders bevorzugt ist eine Härte Shore D zwischen 45 und 55. Die Härte Shore D kann nach der DIN 53505 (in der am 1. Juli 2015 gültigen Fassung) ermittelt werden.

Vorzugsweise liegt die Schälfestigkeit des Bodenbelags bei mehr als 0,5 N/mm. Besonders bevorzugt ist eine Schälfestigkeit von mehr als 1,0 N/mm. Die Schälfestigkeit wird ermittelt nach EN 1372:2015. Die Verklebung kann mit dem Dispersionsklebstoff Wulff Supra-Strong auf Faserzementplatte erfolgen. Vor der Messung erfolgt eine wenigstens zweitägige Lagerung bei Raumtemperatur.

Vorzugsweise liegt die Viskosität der Polymerzusammensetzung MVR/190/21,6 (Prüftemperatur 190°C, Masse 21,6kg) zwischen 3 und 100 cm³/10min. Besonders bevorzugt ist eine Viskosität MVR/190/21,6 zwischen 10 und 50 cm³/10min. Die Viskosität MVR kann ermittelt werden nach ISO 1133 (in der am 1. Juli 2015 gültigen Fassung). Dies trägt unter anderem zu einer guten Verarbeitbarkeit bei.

Vorzugsweise ist die Polymerzusammensetzung thermoplastisch.

In bevorzugter Weist beträgt beim Mischen die Temperatur zwischen 100 °C und 180 °C. Dies trägt zu einem Aufschmelzen der Komponenten A, B und C bei und erleichtert und beschleunigt den Mischprozess.

Vorzugsweise wird beim Mischen den Komponenten A, B und C Energie zugeführt, um die Komponenten A, B und C aufzuschmelzen. Eine die Temperatur erhöhende Energiezufuhr kann durch Scherkräfte erfolgen, welche während des Mischens durch den Mischer erzeugt werden. Alternativ oder zusätzlich kann auch Wärme, z.B. durch eine Heizung vor und/oder während des Mischens zugeführt werden.

Vorzugsweise umfasst das Umformen ein Kalandrieren in einer Kalanderanlage.

Vorzugsweise umfasst das Umformen ein Extrudieren durch einen Breitschlitzkopf. Der Breitschlitzkopf kann insbesondere Teil einer Roller-Head-Anlage sein. Hierbei wird die Polymerzusammensetzung z.B. über einen Breitschlitzkopf in den Walzenspalt eines Kalanders gefördert. Der Kalander kalibriert das Material auf die eingestellte Enddicke.

Vorzugsweise umfasst das Verfahren nach dem Umformen ein Abkühlen des Flächengebildes. Das Abkühlen kann insbesondere mittels Kühlwalzen erfolgen.

Vorzugsweise umfasst das Umformen ein Strukturieren der Oberfläche, z.B. durch eine Prägewalze.

Vorzugsweise erfolgt das Mischen in einem Innenmischer und/oder in einem Mischextruder.

Eine weitere Verbesserung sieht vor, dass das Verfahren nach oder bei dem Umformen ein Aufbringen von Schmuckpartikeln umfasst.

Vorzugsweise umfasst das Verfahren nach dem Umformen ein Schleifen des Flächengebildes. Insbesondere kann die Rückseite des Flächengebildes geschliffen werden. Dies trägt zu guten Klebewerten des Bodenbelages bei.

Vorzugsweise umfasst das Verfahren nach dem Umformen ein Ablängen des Flächengebildes. Das abgelängte Flächengebilde kann dann als Platte oder als Rollenware verlegt werden.

Vorzugsweise ist vorgesehen, dass die Komponente A, die Komponente B und die Komponente C jeweils eine unterschiedliche Zusammensetzung aufweisen.

Vorzugsweise umfasst die Komponente A keine gepfropften Polymere.

Vorzugsweise umfasst die Komponente C keine gepfropften Polymere.

Das Merkmal, wonach die Komponente B ein Polymer umfasst, bei dem Säuregruppen und/oder Anhydridgruppen auf das Polymer gepfropft sind, ist für die Erfindung besonders vorteilhaft, jedoch nicht zwingend. Es ist daher ausdrücklich auch Gegenstand der beschriebenen Erfindung, für die Komponente B ein Polymer vorzusehen, das beschriebene Säuregruppen und/oder Anhydridgruppen aufweist, ohne die Einschränkung, dass die Säuregruppen und/oder die Anhydridgruppen auf das Polymer gepfropft sind. Beispielsweise kann die Komponente B ein Copolymer umfassen, das Säuregruppen und/oder Anhydridgruppen aufweist.

Weitere Ziele, Merkmale, Vorteile und Anwendungsmöglichkeiten der vorliegenden Erfindung ergeben sich aus der nachfolgenden Beschreibung von Ausführungsbeispielen sowie der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1:: Eine schematische perspektivische Darstellung eines erfindungsgemäßen Bodenbelags;
- Fig. 2:: Eine schematische Seitenansicht einer weiteren Ausführungsform eines erfindungsgemäßen Bodenbelags;
- Fig. 3:: Eine schematische Seitenansicht einer noch weiteren Ausführungsform eines erfindungsgemäßen Bodenbelags;
- Fig. 4:: eine schematische Darstellung des Herstellungsverfahrens.

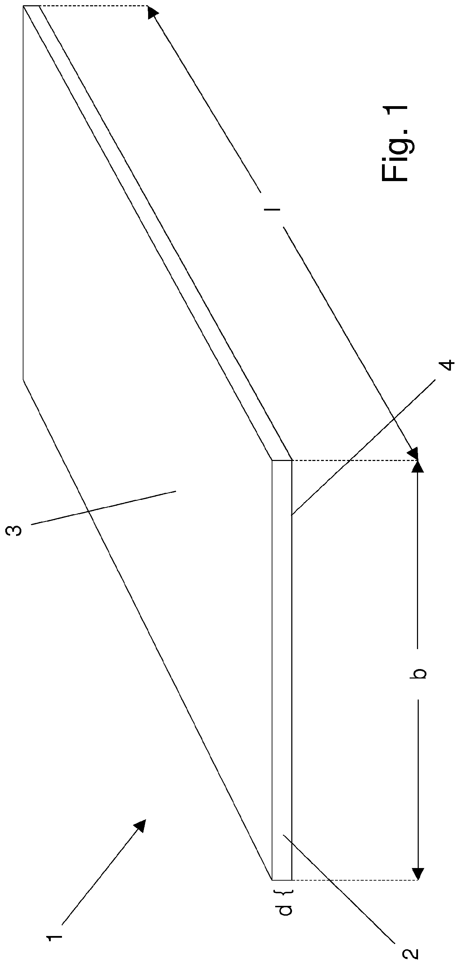

Figur 1 zeigt schematisch einen erfindungsgemäßen Bodenbelag 1. Der dargestellte Bodenbelag ist ein Flächengebilde, dessen Dicke d erheblich kleiner ist als seine Länge l und seine Breite b. Die Dicke d kann insbesondere in dem Bereich zwischen 1 und 10 mm liegen. Die Breite b und die Länge l können je nach der gewünschten Lieferform des Bodenbelages bemessen sein. Insbesondere kann der Bodenbelag als Bahnenware auf einer Rolle geliefert werden oder als Fliesen.

Der Bodenbelag 1 weist eine Tragschicht 2 mit einer unten noch näher beschriebenen Polymerzusammensetzung auf.

Die Tragschicht 2 weist eine Nutzseite 3 und eine Rückseite 4 auf. Die Nutzseite 3 ist bei der bestimmungsgemäßen Anwendung des Bodenbelages zum Raum hin angeordnet. Die Nutzseite kann als Dekorseite ausgebildet sein. Die Rückseite 4 ist zum Untergrund, zum Beispiel zum Estrich hin, ausgerichtet. Die Rückseite 4 kann mit einem Klebstoff für Bodenbeläge, insbesondere mit einem Dispersionsklebstoff, mit dem Unterboden verklebt werden.

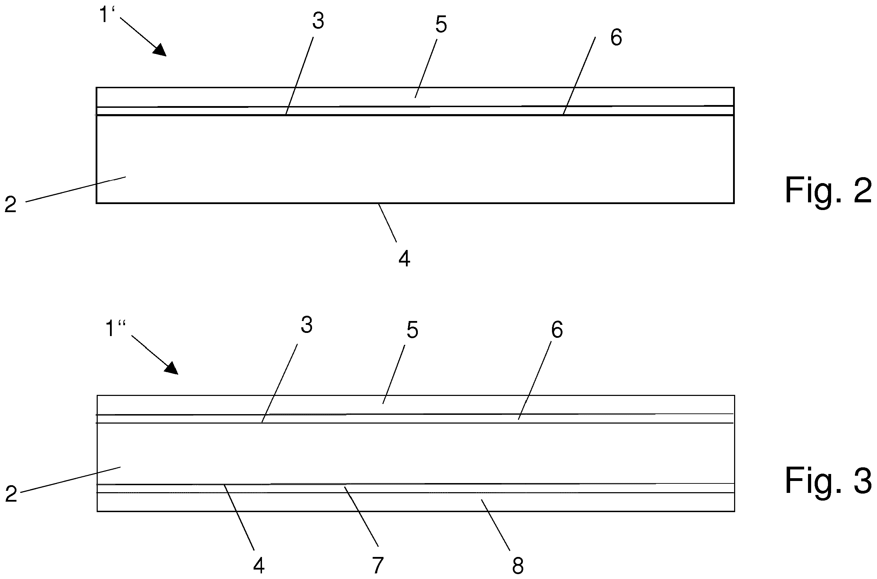

Figur 2 zeigt einen Bodenbelag 1', der wiederrum eine Tragschicht 2 aus einer Polymerzusammensetzung aufweist. Die Tragschicht 2 ist an ihrer Nutzseite 3 mit einer Deckschicht 5 versehen. Die Deckschicht 5 ist nach einer bevorzugten Ausführung eine transparente Folie. Die Deckschicht 5 ist über eine Adhäsionsschicht 6 mit der Tragschicht 2 dauerhaft verbunden. Die Deckschicht 5 ist resistent gegen übliche Beanspruchungen eines Bodenbelages. Insbesondere kann die Deckschicht 5 durch eine lonomerfolie gebildet sein. Entsprechende Folien können beispielsweise aus dem Material Surlyn 1706 von DuPont gefertigt sein. Die Adhäsionsschicht kann beispielsweise aus Nucrel 0903 von DuPont gefertigt sein. Nucrel 0903 umfasst ein Copolymer aus Ethylen und Methacrylsäure mit einem MA-Anteil von 9%. Die Deckschicht 5 und die Adhäsionsschicht 6 können insbesondere als koextrudiertes Material mit einer Dicke von etwa 200 µm bereitgestellt und unter Zufuhr von Wärme auf die vorab hergestellte Tragschicht 2 auflaminiert werden.

Die Darstellung in den Figuren dient allein der Verdeutlichung des Produktaufbaus. Die Darstellung ist nicht maßstabsgerecht.

Der in Figur 3 dargestellte Aufbau des Bodenbelages 1" stimmt für die Tragschicht 2 und die Nutzseite 3 mit demjenigen aus Figur 2 überein. Auf die entsprechende Beschreibung wird verwiesen. Zusätzlich weist der Bodenbelag 1" auf der Rückseite 4 eine vorab aufgebrachte Klebeschicht 7 auf. Die Klebeschicht 7 ist mit einer abziehbaren Abdeckung 8 versehen. Der Bodenbelag 1" kann mit einem Untergrund verklebt werden, ohne dass beim Verlegen ein Klebstoff aufgebracht werden muss. Es genügt, bei dem Verlegen die Abdeckung 8 zu entfernen und den mit der Klebeschicht 7 versehenen Bodenbelag 1" mit dem Untergrund in Kontakt zu bringen.

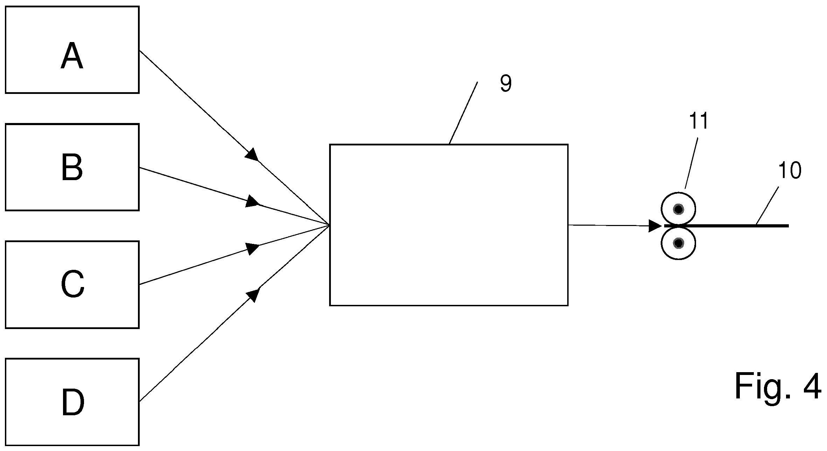

Figur 4 zeigt schematisch die Herstellung des Bodenbelages. Zunächst werden die Komponenten A, B und C bereitgestellt. Hierbei kann es sich insbesondere um die in den unten angeführten Ausführungsbeispielen angegebenen Stoffe handeln. Beispielsweise können entsprechend Ausführungsbeispiel 24 als Komponente A 15 Gewichtsanteile VLDPE 1, 10 Gewichtsanteile POE 1 und 15 Gewichtsanteile EVA 1 bereitgestellt werden. Als Komponente B können entsprechend Ausführungsbeispiel 24 20 Gewichtsanteile MAH-LDPE2 bereitgestellt werden. Als Komponente C können entsprechend Ausführungsbeispiel 24 40 Gewichtsanteile SIS 1 bereitgestellt werden.

Darüber hinaus werden die weiteren Bestandteile der Polymerzusammensetzung bereitgestellt. Diese sind zusammenfassend mit D bezeichnet. Bei den weiteren Bestandteilen kann es sich insbesondere um Füllstoffe, Verarbeitungshilfsmittel, Öl, Alterungsschutzmittel und/oder Farbmittel handeln. Beispielsweise können entsprechend Ausführungsbeispiel 24 300 Gewichtsanteile Füllstoff (FS), 4,5 Gewichtsanteile Öl (ÖL), 0,5 Gewichtsanteile Verarbeitungshilfsmittel (VHM) und 0,5 Gewichtsanteile Alterungsschutz (AS) bereitgestellt werden.

Die Komponenten A, B und C sowie die weiteren Bestandteile D werden zusammen in einen Mischer 9 gegeben und intensiv durchmischt. Der Mischer 9 kann beispielsweise als Innenmischer oder als Mischextruder ausgebildet sein. Bei dem Mischen kann durch Scherkräfte die Wärme zum Aufschmelzen der Komponenten A, B und C erzeugt werden. Die Scherkräfte in dem Material werden durch den Mischvorgang erzeugt. Alternativ oder zusätzlich kann Wärme, z.B. durch eine Heizung, zugeführt werden. Der Mischvorgang wird durchgeführt, bis die aufgeschmolzenen Polymere der Komponenten A, B und C eine einheitliche Masse bilden. Beispielsweise kann die Temperatur bei dem Mischen zwischen 100 °C und 180 °C liegen. Damit der gewünschte Temperaturbereich nicht überschritten wird, kann eine Kühlung vorgesehen sein, die beim Mischen entstehende überschüssige Wärme abführt.

Die Polymerzusammensetzung wird nach dem Mischen zu einem Flächengebilde 10 umgeformt. Das Umformen kann beispielsweise durch einen Extruder mit Breitschlitzkopf und/oder durch Kalandrieren in einer Kalanderanlage 11 erfolgen. Vorzugsweise wird die Polymerzusammensetzung zunächst durch einen Extruder mit Breitschlitzkopf extrudiert und dann zusätzlich durch Kalandrieren auf die gewünschte Dicke gebracht.

Das Kalandrieren erfolgt insbesondere in einem warmen Zustand, in dem die Zusammensetzung bereits formstabil ist, jedoch leicht plastisch verformt werden kann. Anschließend wird das Flächengebilde 10 abgekühlt, beispielsweise auf weniger als 60°C. Das Abkühlen kann insbesondere über Kühlwalzen erfolgen.

Das Flächengebilde 10 kann zur Erzeugung von optisch ansprechenden Bodenbelägen auf der Nutzseite 3 mit Schmuckgranulaten bestreut werden. Das Aufbringen von Schmuckgranulaten kann insbesondere vor und/oder während des Umformens erfolgen. Die Nutzseite 3 kann zudem auch auf andere Weise mit einem Dekor versehen werden.

Sofern der Bodenbelag 1 eine weitere Schicht aufweist, kann diese auf das Flächengebilde 10 aufgebracht werden. Beispielsweise kann auf das Flächengebilde 10, welches die Tragschicht 2 bildet, eine Deckschicht 5 mit der Adhäsionsschicht 6 auflaminiert werden, um den in Figur 2 dargestellten Bodenbelag zu erhalten. Darüber hinaus kann eine Klebeschicht 7 und eine Abdeckung 8 auf der Rückseite 4 aufgebracht werden, um den in Figur 3 dargestellten Bodenbelag zu erhalten Die Abdeckung 8 kann eine silikonisierte HDPE-Folie umfassen.

Zur Erzielung einer verbesserten Klebehaftung kann die Rückseite 4 geschliffen werden. Sofern der Bodenbelag mit einer Klebeschicht 7 versehen wird, erfolgt das Schleifen vor dem Aufbringen der Klebeschicht 7.

Nachfolgend wird eine Reihe von Beispielen für die Polymerzusammensetzung beschrieben. Darüber hinaus ist für jedes Beispiel eine Schälfestigkeit angegeben. Die Schälfestigkeit ist nach der Norm EN 1372:2015 ermittelt. Die Verklebung erfolgte dabei mit dem Dispersionsklebstoff Wulff Supra-Strong auf Faserzementplatte. Vor der Messung erfolgte eine zweitägige Lagerung bei Raumtemperatur. Weiterhin angegeben sind jeweils die Zugfestigkeit und die Reißdehnung. Diese werden im Zugversuch nach Norm DIN 53504 an R1-Prüfköpern bei 23°C ermittelt. Zudem enthalten die Tabellen Angaben zu dem Weiterreißwiderstand, der nach der Norm ISO 34-1 Verfahren B, Arbeitsweise A ermittelt ist. Die Härte Shore D ist nach der Norm DIN 53505 ermittelt. Die Viskosität MVR ist nach der Norm DIN EN ISO 1133 ermittelt Die Angaben beziehen sich jeweils auf die Normen in der am 1. Juli 2015 gültigen Fassung. Die Glasübergangstemperatur T_{G} ist nach der DIN EN ISO 11357-2 in der am 1. Juli 2015 gültigen Fassung bestimmt. Die genannten Werte sind jeweils nach dem Halbstufenhöhenverfahren ermittelt.

Bestandteile der beispielhaft angegebenen Polymerzusammensetzungen sind folgende Komponenten:

### Komponente A

VLDPE 1 bezeichnet ein VLDPE. Das Produkt ist unter dem Namen Clearflex CL DO (versalis) erhältlich.

POE 1 bezeichnet ein POE, das unter dem Produktnamen Exact 8210 (Exxon) erhältlich ist. Das Produkt enthält ein Ethylen-Octen-Copolymer.

EVA 1 bezeichnet ein EVA, das unter dem Produktnamen Greenflex ML50 (versalis) erhältlich ist. Der Anteil an copolymerisiertem Vinylacetat (VA) liegt bei 19%.

### Komponente B

MAH-EVA 1 bezeichnet ein mit Maleinsäureanhydrid (MAH) gepfropftes EVA. Das Produkt ist unter dem Produktnamen Fusabond C250 (DuPont) erhältlich. Der Anteil an copolymerisiertem Vinylacetat liegt bei 28%. Der Anteil an MAH liegt bei 1,5 Gew%.

MAH-LDPE 1 bezeichnet ein mit Maleinsäureanhydrid (MAH) gepfropftes LDPE. Das Produkt ist unter dem Produktnamen Scona TSPE 1112 GALL (BYK) erhältlich. Das LDPE ist mit 2 Gew% MAH gepfropft.

MAH-LDPE 2 bezeichnet ein weiteres mit Maleinsäureanhydrid (MAH) gepfropftes LDPE. Das Produkt ist unter dem Produktnamen Fusabond E226 (DuPont) erhältlich. Das LDPE ist mit 1 Gew% MAH gepfropft.

AA-LDPE 1 bezeichnet ein mit Acrylsäure (AA) gepfropftes LDPE. Das Produkt ist unter dem Produktnamen Scona TPPE 2611 PALL (BYK) erhältlich. Das LDPE ist mit 6 Gew% AA gepfropft.

MAH-EVA 2 bezeichnet ein mit Maleinsäureanhydrid (MAH) gepfropftes EVA. Das Produkt ist unter dem Namen Scona TPEV 1112 PB (BYK) erhältlich. Das EVA ist mit 2,5 Gew% MAH gepfropft.

AA-EVA 1 bezeichnet ein mit Acrylsäure (AA) gepfropftes EVA. Das Produkt ist unter dem Produktnamen Scona TPEV 1110 PB (BYK) erhältlich. Das EVA ist mit 2 Gew% AA gepfropft.

MAH-SEBS 1 bezeichnet ein mit Maleinsäureanhydrid (MAH) gepfropftes SEBS. Das Produkt ist unter dem Produktnamen Scona TSKD 9103 (BYK) erhältlich. Das SEBS ist mit 1,5 Gew% MAH gepfropft.

### Komponente C

SIS 1 bezeichnet ein thermoplastisches Elastomer umfassend Styrol-Isopren-Styrol (SIS). Das Produkt ist unter dem Produktnamen Hybrar 5127 (Kuraray) erhältlich. SIS 1 enthält 1,2-verknüpfte, vinylständig eingebaute Isoprenmonomere. Der Anteil vinylständiger Isoprengruppen beträgt mehr als 70 Gew%. Die Glasübergangstemperatur T_{G} der Weichphase beträgt plus 8°C.

SIS 2 bezeichnet ein thermoplastisches Elastomer umfassend Styrol-Isopren-Styrol (SIS). Das Produkt ist unter dem Namen Europrene SOL T9326 (versalis) erhältlich. Der Styrolanteil liegt bei 30%. Der Diblock-Anteil liegt bei 20%. Die Glasübergangstemperatur T_{G} der Weichphase beträgt minus 56°C.

SEBS 1 bezeichnet ein SEBS. Das Produkt ist unter dem Produktnamen Europrene SOL TH2311 (versalis) erhältlich. Der Styrolanteil liegt bei 30 %. Die Glasübergangstemperatur T_{G} der Weichphase beträgt minus 50°C.

SBS 1 bezeichnet ein SBS. Dieses ist unter dem Produktnamen Styroflex 2 G 66 (Styrolution) erhältlich. Der Styrolanteil liegt bei 60 %. SBS 1 enthält Styrol in der Weichphase. Hierzu enthält das Produkt Styrol/Butadien-Copolymerblöcke. Die Glasübergangstemperatur T_{G} der Weichphase beträgt minus 39°C.

SBS 2 bezeichnet ein SBS. Dieses ist unter dem Produktnamen Europrene SOL T166 (versalis) erhältlich. Bei diesem Produkt liegt der Diblock-Anteil bei 10%. Der Styrolanteil liegt bei 30%. Die Glasübergangstemperatur T_{G} der Weichphase beträgt minus 118 °C.

SBS 3 bezeichnet ein SBS. Dieses ist unter dem Produktnamen Europrene SOL T6414 (versalis) erhältlich. Bei diesem Produkt liegt der Diblock-Anteil bei 22%. Der Styrolanteil liegt bei 40%. Die Glasübergangstemperatur T_{G} der

Weichphase beträgt minus 117 °C.

### Weitere Bestandteile der Polymerzusammensetzung

FS bezeichnet einen Füllstoff. In den Rezeptbeispielen wird Kreide als Füllstoff eingesetzt.

ÖL bezeichnet ein Öl. In den Rezeptbeispielen wird synthetisches Öl verwendet.

VHM bezeichnet ein Verarbeitungshilfsmittel. In den dargestellten Beispielen wird Stearinsäure als Verarbeitungshilfsmittel eingesetzt.

AS bezeichnet ein Alterungsschutzmittel. In den Beispielen wird Irganox 1010 (BASF) als Alterungsschutzmittel eingesetzt.

In den Tabellen sind für die einzelnen Komponenten Gewichtsanteile angegeben. Die Angaben beziehen sich dabei jeweils auf die Summe der Komponenten A, B und C der Polymerzusammensetzung, welche zusammen 100 Gewichtsanteile ausmachen.

Die Tabelle 1 zeigt Beispiele 1 - 6. Hiervon sind die Beispiele 1 und 2 Vergleichsbeispiele, während die Ausführungsbeispiele 3 bis 6 erfindungsgemäß sind. Die Polymerzusammensetzung enthält als Komponente A jeweils VLDPE 1. Die Beispiele 1 und 3 bis 6 enthalten als Komponente B jeweils MAH-EVA 1. Weiterhin enthalten die Beispiele 2 bis 6 als Komponente C jeweils SBS 1 bzw. SIS 1. Darüber hinaus enthalten die in Tabelle 1, wie auch die in den weiteren Tabellen dargestellten Ausführungsbeispiele, jeweils Füllstoff (FS), synthetisches Öl (ÖL), Verarbeitungshilfsmittel (VHM) und Alterungsschutz (AS). Die in dem unteren Teil der Tabelle wiedergegebenen Messwerte zeigen, dass die Ausführungsbeispiele 3 bis 6 zum einen gute mechanische Eigenschaften bei einer brauchbaren Schälfestigkeit aufweisen. Die Schälfestigkeit ist dabei ein Maß für die Klebeeigenschaften des Bodenbelags. Für eine gute Haftung des Bodenbelages am Unterboden ist es erwünscht, dass die Schälfestigkeit bei 0,5 N/mm oder mehr liegt. Ausführungsbeispiel 3 liegt mit 0,4 N/mm zwar knapp darunter. Gut erkennbar ist in der Tabelle 1 jedoch, dass die Ausführungsbeispiele 3 bis 6 gegenüber den Beispielen 1 und 2 deutlich verbesserte mechanische Eigenschaften haben, welche sich in den Messwerten für Zugfestigkeit, Reißdehnung, Weiterreißwiderstand und Härte widerspiegeln. Vorteilhaft ist dabei, wenn der Weiterreißwiderstand für einen Bodenbelag bei etwa 25 N/mm oder mehr liegt. Die Zugfestigkeit liegt bei den Ausführungsbeispielen 3 bis 6 durchgängig über 5 N/mm². Damit ergibt sich eine gute Brauchbarkeit als Bodenbelag. Weiterhin ist aus der Tabelle 1 ersichtlich, dass die Ausführungsbeispiele 3 bis 6 eine erheblich verbesserte Reißdehnung haben. Diese sollte für elastische Bodenbeläge bei mehr als 25 % liegen. Weiterhin ist erkennbar, dass bei Ausführungsbeispiel 6 40 Anteile SIS 1 enthalten sind. Die Schälfestigkeit und die Reißdehnung sind hierbei deutlich erhöht, wobei gute Werte für Zugfestigkeit und Weiterreißwiderstand erhalten bleiben.

**Tabelle 1**

| | **1** | **2** | **3** | **4** | **5** | **6** |
|---|---|---|---|---|---|---|
| **VLDPE 1** | 80 | 50 | 60 | 60 | 40 | 40 |
| **MAH-EVA 1** | 20 | | 20 | 20 | 20 | 20 |
| **SBS 1** | | 50 | 20 | | 40 | |
| **SIS 1** | | | | 20 | | 40 |
| **FS** | 300 | 300 | 300 | 300 | 300 | 300 |
| **ÖL** | 18 | 18 | 18 | 18 | 18 | 18 |
| **VHM** | 2 | 2 | 2 | 2 | 2 | 2 |
| **AS** | 0,5 | 0,5 | 0,5 | 0,5 | 0,5 | 0,5 |
| **Schälfestigkeit [N/mm]** | 0,2 | 0,6 | 0,4 | 0,5 | 0,5 | 0,8 |
| **Zugfestigkeit [N/mm²]** | 4,9 | 3,2 | 5,4 | 5,5 | 5,8 | 5,4 |
| **Reißdehnung [%]** | 10 | 14 | 27 | 34 | 28 | 60 |
| **Weiterreißwiderstand [N/mm] ISO** | 20 | 18 | 24 | 25 | 27 | 23 |
| **Härte [Shore D]** | 37 | 29 | 37 | 37 | 39 | 36 |
| **MVR [cm³/10min] 190°C/21,6 kg** | >200 | >200 | >200 | >200 | >200 | >200 |

Die Tabelle 2 zeigt weitere Beispiele 7 bis 11. Hiervon sind die Beispiele 7 und 8 Vergleichsbeispiele, während die Ausführungsbeispiele 9 bis 11 erfindungsgemäß sind. Als Komponente A enthalten die Polymerzusammensetzungen jeweils eine Mischung aus VLDPE 1, POE 1 und EVA 1. Für die Komponente B ist jeweils MAH-LDPE 1 vorgesehen. Als Komponente C enthalten die Polymerzusammensetzungen der Ausführungsbeispiele 2 bis 6 SBS 1 oder SIS 1.

Die Beispiele 9, 10 und 11 zeigen, dass für die Schälfestigkeit verbesserte Werte erreicht werden, die deutlich über 0,5 N/mm liegen. Gleichzeitig sind die mechanischen Werte des Bodenbelags, wie insbesondere die Zugfestigkeit, die Reißdehnung und der Weiterreißwiderstand deutlich höher als bei den Ausführungsbeispielen aus Tabelle 1. Auch die Härte liegt in einem für Bodenbeläge günstigen Bereich. Die Beispiele 7 und 8, die jeweils entweder nur die Komponente B oder die Komponente C enthalten, erreichen hingegen nur eine Schälfestigkeit, die deutlich unter derjenigen der Beispiele 9 bis 11 liegen.

**Tabelle 2**

| | **7** | **8** | **9** | **10** | **11** |
|---|---|---|---|---|---|
| **VLDPE 1** | 30 | 25 | 20 | 15 | 15 |
| **POE 1** | 25 | 20 | 15 | 10 | 10 |
| **EVA 1** | 30 | 25 | 20 | 15 | 15 |
| **MAH-LDPE 1** | 15 | | 15 | 15 | 15 |
| **SBS 1** | | 30 | | 45 | |
| **SIS 1** | | | 30 | | 45 |
| **FS** | 300 | 300 | 300 | 300 | 300 |
| **ÖL** | 18 | 18 | 18 | 18 | 18 |
| **VHM** | 2 | 2 | 2 | 2 | 2 |
| **AS** | 0,5 | 0,5 | 0,5 | 0,5 | 0,5 |
| **Schälfestigkeit [N/mm]** | 0,2 | 0,3 | 0,6 | 0,6 | 0,7 |
| **Zugfestigkeit [N/mm²]** | 7,4 | 6,2 | 7,0 | 7,5 | 7,0 |
| **Reißdehnung [%]** | 60 | 25 | 65 | 46 | 61 |
| **Weiterreißwiderstand [N/mm] ISO** | 40 | 27 | 35 | 36 | 35 |
| **Härte [Shore D]** | 43 | 39 | 42 | 45 | 42 |
| **MVR [cm³/10min] 190°C/21,6 kg** | 55 | 38 | 71 | 46 | 103 |

Die Tabelle 3 zeigt die Beispiele 12 bis 19. Hiervon ist Beispiel 12 ein Vergleichsbeispiel, während die Ausführungsbeispiele 13 bis 19 erfindungsgemäß sind. Als Komponente A ist dabei jeweils eine Mischung aus VLDPE 1, POE 1 und EVA 1 vorgesehen. Komponente B ist jeweils MAH-LDPE 1. Als Komponente C enthalten die Polymerzusammensetzungen SBS 1, SBS 2, SBS 3, SIS 1, SIS 2 oder SEBS 1.

Tabelle 3 lässt gut erkennen, dass bei den Ausführungsbeispielen 13 bis 19 besonders gute Klebewerte (Schälfestigkeit) erreicht werden. Diese liegen teilweise sogar deutlich über 1 N/mm. Gleichzeitig konnten die Werte für Zugfestigkeit und Weiterreißwiderstand weiter verbessert werden. Auch die Härte liegt in einem für Bodenbeläge besonders günstigen Bereich zwischen Shore D 45 und 55.

**Tabelle 3**

| | **12** | **13** | **14** | **15** | **16** | **17** | **18** | **19** |
|---|---|---|---|---|---|---|---|---|
| **VLDPE 1** | 30 | 15 | 15 | 15 | 15 | 15 | 15 | 15 |
| **POE 1** | 25 | 10 | 10 | 10 | 10 | 10 | 10 | 10 |
| **EVA 1** | 30 | 15 | 15 | 15 | 15 | 15 | 15 | 15 |
| **MAH-LDPE 1** | 15 | 15 | 15 | 15 | 15 | 15 | 15 | 15 |
| **SBS 1** | | 45 | | | | | | 15 |
| **SBS 2** | | | | 45 | | | | |
| **SBS 3** | | | | | | 45 | | |
| **SIS 1** | | | 45 | | | | | 30 |
| **SIS 2** | | | | | | | 45 | |
| **SEBS 1** | | | | | 45 | | | |
| **FS** | 300 | 300 | 300 | 300 | 300 | 300 | 300 | 300 |
| **ÖL** | 4,5 | 4,5 | 4,5 | 4,5 | 4,5 | 4,5 | 4,5 | 4,5 |
| **VHM** | 0,5 | 0,5 | 0,5 | 0,5 | 0,5 | 0,5 | 0,5 | 0,5 |
| **AS** | 0,5 | 0,5 | 0,5 | 0,5 | 0,5 | 0,5 | 0,5 | 0,5 |
| **Schälfestigkeit [N/mm]** | 0,3 | 0,7 | 1,3 | 1,0 | 0,8 | 0,9 | 1,0 | 1,2 |
| **Zugfestigkeit [N/mm²]** | 8,9 | 9,7 | 9,1 | 7,9 | 9,5 | 8,6 | 7,9 | 8,9 |
| **Reißdehnung [%]** | 41 | 27 | 50 | 50 | 24 | 18 | 81 | 51 |
| **Weiterreißwiderstand [N/mm] ISO** | 52 | 58 | 51 | 42 | 59 | 53 | 47 | 50 |
| **Härte [Shore D]** | 51 | 51 | 49 | 48 | 50 | 51 | 47 | 53 |
| **MVR [cm³/10min] 190 °C/21,6 kg.** | 21 | 23 | 31 | 14 | 3 | 16 | 22 | 16 |

Die Tabelle 4 zeigt erfindungsgemäße Ausführungsbeispiele 20 bis 25. Dabei zeigt die Tabelle 4 Polymerzusammensetzungen, die als Komponente A jeweils eine Mischung aus VLDPE 1, POE 1 und EVA 1 enthalten. Als Komponente B enthalten die Mischungen MAH-LDPE 1, MAH-LDPE 2, AA-LDPE 1, MAH-EVA 2, AA-EVA 1 oder MAH-SEBS 1. Als Komponente C ist jeweils SIS 1 vorgesehen.

Die Tabelle zeigt, dass jeweils sehr gute Klebewerte (Schälfestigkeit) erreicht werden können, die über 1 N/mm liegen. Auch die weiteren mechanischen Werte, wie Zugfestigkeit und Weiterreißwiderstand liegen auf einem hohen Niveau. Auch die Reißdehnung liegt auf einem guten Niveau. Die Tabelle zeigt unter anderem, dass sich sowohl mit einer Komponente B, die Säuregruppen umfasst, als auch eine Komponente B, die Anhydridgruppen umfasst, gute Ergebnisse erzielen lassen. Die Ausführungsbeispiele 20, 22, 24 und 25, die jeweils mit Maleinsäureanhydridgruppen gepfropfte Polymere aufweisen, weisen dabei über alle Parameter gute Werte auf. Aber auch bei den Zusammensetzungen, die mit Acrylsäuregruppen gepfropfte Polymere enthalten, lassen sich gute Werte erreichen. Tabelle 4 belegt, dass mit Polymerzusammensetzungen, die als Komponente C 1,2-verknüpfte vinylständig eingebaute Isoprenmonomere und als Komponente B gepfropfte Polymere enthalten, sehr gute Werte für den Bodenbelag erreicht werden können.

**Tabelle 4**

| | **20** | **21** | **22** | **23** | **24** | **25** |
|---|---|---|---|---|---|---|
| **VLDPE 1** | 15 | 15 | 15 | 15 | 15 | 20 |
| **POE 1** | 10 | 10 | 10 | 10 | 10 | 15 |
| **EVA 1** | 15 | 15 | 15 | 15 | 15 | 20 |
| **MAH-LDPE 1** | 20 | | | | | |
| **MAH-LDPE 2** | | | | | 20 | |
| **AA-LDPE 1** | | 20 | | | | |
| **MAH-EVA 2** | | | 20 | | | |
| **AA-EVA 1** | | | | 20 | | |
| **MAH-SEBS 1** | | | | | | 20 |
| **SIS 1** | 40 | 40 | 40 | 40 | 40 | 25 |
| **FS** | 300 | 300 | 300 | 300 | 300 | 300 |
| **ÖL** | 4,5 | 4,5 | 4,5 | 4,5 | 4,5 | 4,5 |
| **VHM** | 0,5 | 0,5 | 0,5 | 0,5 | 0,5 | 0,5 |
| **AS** | 0,5 | 0,5 | 0,5 | 0,5 | 0,5 | 0,5 |
| **Schälfestigkeit [N/mm]** | 1,0 | 1,1 | 1,1 | 1,2 | 1,1 | 1,0 |
| **Zugfestigkeit [N/mm²]** | 8,9 | 8,4 | 7,6 | 7,5 | 9,2 | 9,0 |
| **Reißdehnung [%]** | 56 | 40 | 39 | 44 | 67 | 47 |
| **Weiterreißwiderstand [N/mm] ISO** | 49 | 41 | 37 | 36 | 47 | 37 |
| **Härte [Shore D]** | 52 | 51 | 48 | 47 | 51 | 48 |
| **MVR [cm³/10min] 190 °C/21,6 kg** | 19 | 42 | 25 | 24 | 8 | 16 |

## Patentansprüche

1. Bodenbelag enthaltend eine Polymerzusammensetzung, die eine Mischung einer Komponente A, einer Komponente B und einer Komponente C umfasst, wobei die Komponente A ein Olefin-basiertes Polymer umfasst, wobei die Komponente B ein Polymer umfasst, das Säuregruppen und/oder Anhydridgruppen umfasst, und wobei die Komponente C ein styrolbasiertes thermoplastisches Elastomer umfasst, **dadurch gekennzeichnet, dass** das styrolbasierte thermoplastische Elastomer eine Hartphase und eine Weichphase aufweist und dass die Weichphase eine Glasübergangstemperatur T_{G} aufweist, die bei minus 50°C oder höher liegt.

2. Bodenbelag nach Anspruch 1, **dadurch gekennzeichnet, dass** die Säuregruppen und/oder Anhydridgruppen des Polymers der Komponente B auf das Polymer gepfropft sind.

3. Bodenbelag nach einem der Ansprüche 1 bis 2, **dadurch gekennzeichnet, dass** das styrolbasierte thermoplastische Elastomer ein 1,2-verknüpftes, vinyl-ständig eingebautes Isoprenmonomer umfasst.

4. Bodenbelag nach einem der Ansprüche 1 bis 3, **dadurch gekennzeichnet, dass** das styrolbasierte thermoplastische Elastomer einen Styrolgehalt zwischen 15 Gew% und 80 Gew% aufweist.

5. Bodenbelag nach einem der Ansprüche 1 bis 4, **dadurch gekennzeichnet, dass** das styrolbasierte thermoplastische Elastomer wenigstens eine Verbindung ausgewählt aus der Gruppe bestehend aus Styrol-Butadien-Styrol-Block-Copolymer (SBS), Styrol-Isopren-Styrol-Block-Copolymer (SIS), Styrol-Ethylen- Butylen-Styrol-Blockcopolymer (SEBS) und Styrol-Ethylen-Propylen-Styrol-Blockcopolymer (SEPS) umfasst.

6. Bodenbelag nach einem der Ansprüche 1 bis 5, **dadurch gekennzeichnet, dass** das styrolbasierte thermoplastische Elastomer ein Block-Copolymer umfasst.

7. Bodenbelag nach Anspruch 5, **dadurch gekennzeichnet, dass** das styrolbasierte thermoplastische Elastomer einen Anteil an Diblock-Copolymer umfasst.

8. Bodenbelag nach einem der Ansprüche 1 bis 7, **dadurch gekennzeichnet, dass** das styrolbasierte thermoplastische Elastomer eine Tri-Block Struktur S-X-S aufweist, wobei S ein Styrolblock ist und X ein Block mit bei 20°C elastomeren Eigenschaften.

9. Bodenbelag nach einem der Ansprüche 1 bis 8, **dadurch gekennzeichnet, dass** die Komponente A wenigstens ein Olefin-basiertes Polymer enthält, das ausgewählt ist aus der Gruppe bestehend aus Ethylen-Vinylacetat (EVA), Ethylen-Methacrylsäure (EMA), Ethylen-Butylacrylat (EBA), Ethylen-Ethylacrylat (EEA), Ethylen-Propylen-Copolymer (EPM), Very-Low-Density Polyethylen (VLDPE), Linear Low-Density Polyethylene (LLDPE), Polyolefin-Elastomer (POE), Polyethylen (PE), Polypropylen (PP), Low-Density Polyethylen (LDPE) und Polyolefin Plastomer (POP).

10. Bodenbelag nach einem der Ansprüche 1 bis 9, **dadurch gekennzeichnet, dass** das von der Komponente B umfasste Polymer Maleinsäureanhydrid-Gruppen und/oder Acrylsäure-Gruppen umfasst.

11. Bodenbelag nach einem der Ansprüche 1 bis 10, **dadurch gekennzeichnet, dass** die Komponente B ein Polymer umfasst, das mit dem Olefin-basierten Polymer der Komponente A und/oder mit dem styrolbasierten thermoplastischen Elastomer der Komponente C übereinstimmt.

12. Bodenbelag nach einem der Ansprüche 2 bis 11, **dadurch gekennzeichnet, dass** bei der Komponente B die auf das Polymer gepfropften Säuregruppen und/oder Anhydridgruppen mehr als 1 Gew% der Komponente B ausmachen.

13. Verfahren zur Herstellung eines Bodenbelags nach einem der Ansprüche 1 bis 12 mit folgenden Schritten:
- Bereitstellen einer Komponente A, einer Komponente B und einer Komponente C, wobei die Komponente A ein Olefin-basiertes Polymer umfasst, wobei die Komponente B ein Polymer umfasst, das Säuregruppen und/oder Anhydridgruppen umfasst, wobei die Komponente C ein styrolbasiertes thermoplastisches Elastomer umfasst, wobei das styrolbasierte thermoplastische Elastomer eine Hartphase und eine Weichphase aufweist und wobei die Weichphase eine Glasübergangtemperatur T_{G} aufweist, die bei minus 50 °C oder höher liegt;
- Herstellen einer Polymerzusammensetzung durch Mischen der Komponente A, der Komponente B und der Komponente C in einem Mischer;
- Umformen der Polymerzusammensetzung zu einem Flächengebilde.

14. Verfahren nach Anspruch 13, **dadurch gekennzeichnet, dass** die Komponente A zwischen 10 und 85 Gewichtsanteile bezogen auf die Summe der Komponenten A, B und C in der Polymerzusammensetzung ausmacht und/oder die Komponente B zwischen 1 und 40 Gewichtsanteile bezogen auf die Summe der Komponenten A, B und C in der Polymerzusammensetzung der Polymerzusammensetzung ausmacht und/oder die Komponente C zwischen 10 bis 85 Gewichtsanteile bezogen auf die Summe der Komponenten A, B und C in der Polymerzusammensetzung der Polymerzusammensetzung ausmacht.

## Claims

1. Floor covering containing a polymer composition comprising a mixture of a component A, a component B and a component C, component A comprising an olefin-based polymer, component B comprising a polymer which comprises acid groups and/or anhydride groups, and component C comprising a styrene-based thermoplastic elastomer, **characterised in that** the styrene-based thermoplastic elastomer comprises a hard phase and a soft phase, and **in that** the soft phase has a glass transition temperature T_{G} of -50 °C or higher.

2. Floor covering according to claim 1, **characterised in that** the acid groups and/or anhydride groups of the polymer of component B are grafted onto the polymer.

3. Floor covering according to either claim 1 or claim 2, **characterised in that** the styrene-based thermoplastic elastomer comprises a 1,2-linked isoprene monomer incorporated in a vinyl-based manner.

4. Floor covering according to any of claims 1 to 3, **characterised in that** the styrene-based thermoplastic elastomer has a styrene content of between 15 % by weight and 80 % by weight.

5. Floor covering according to any of claims 1 to 4, **characterised in that** the styrene-based thermoplastic elastomer comprises at least one compound from the group consisting of styrene-butadiene-styrene block copolymers (SBS), styrene-isoprene-styrene block copolymers (SIS), styrene-ethylene-butylene-styrene block copolymers (SEBS) and styrene-ethylene-propylene-styrene block copolymers (SEPS).

6. Floor covering according to any of claims 1 to 5, **characterised in that** the styrene-based thermoplastic elastomer comprises a block copolymer.

7. Floor covering according to claim 5, **characterised in that** the styrene-based thermoplastic elastomer comprises a proportion of diblock copolymer.

8. Floor covering according to any of claims 1 to 7, **characterised in that** the styrene-based thermoplastic elastomer comprises a triblock structure S-X-S, S being a styrene block and X being a block having elastomeric properties at 20 °C.

9. Floor covering according to any of claims 1 to 8, **characterised in that** component A comprises at least one olefin-based polymer selected from the group consisting of ethylene vinyl acetate (EVA), ethylene methacrylic acid (EMA), ethylene butyl acrylate (EBA), ethylene ethyl acrylate (EEA), ethylene propylene copolymer (EPM), very-low-density polyethylene (VLDPE), linear low-density polyethylene (LLDPE), polyolefin elastomer (POE), polyethylene (PE), polypropylene (PP), low-density polyethylene (LDPE) and polyolefin plastomer (POP).

10. Floor covering according to any of claims 1 to 9, **characterised in that** the polymer comprised by component B includes maleic acid anhydride groups and/or acrylic acid groups.

11. Floor covering according to any of claims 1 to 10, **characterised in that** the component B comprises a polymer which corresponds to the olefin-based polymer of component A and/or to the styrene-based thermoplastic elastomer of component C.

12. Floor covering according to any of claims 2 to 11, **characterised in that** in component B the acid groups and/or anhydride groups grafted onto the polymer make up more than 1 % by weight of component B.

13. Method for manufacturing a floor covering according to any of claims 1 to 12, comprising the following steps:
- providing a component A, a component B and a component C, component A comprising an olefin-based polymer, component B comprising a polymer which comprises acid groups and/or anhydride groups, and component C comprising a styrene-based thermoplastic elastomer, the styrene-based thermoplastic elastomer comprising a hard phase and a soft phase, and the soft phase having a glass transition temperature T_{G} of -50 °C or higher;
- manufacturing a polymer composition by mixing component A, component B and component C in a mixer;
- shaping the polymer composition into a planar formation.

14. Method according to claim 13, **characterised in that** component A makes up between 10 and 85 parts by weight based on the total of components A, B and C in the polymer composition and/or component B makes up between 1 and 40 parts by weight based on the total of components A, B and C in the polymer composition of the polymer composition and/or component C makes up between 10 and 85 parts by weight based on the total of components A, B and C in the polymer composition of the polymer composition.

## Revendications

1. Revêtement de sol comprenant une composition de polymères, laquelle comprend un mélange d'un composant A, d'un composant B, et d'un composant C, dans lequel le composant A comprend un polymère à base d'oléfine, dans lequel le composant B comprend un polymère comprenant des groupes acide et/ou des groupes anhydride, et dans lequel le composant C comprend un élastomère thermoplastique à base de styrène, **caractérisé en ce que** l'élastomère thermoplastique à base de styrène présente une phase dure et une phase molle et **en ce que** la phase molle présente une température de transition vitreuse T_{G}, qui est supérieure ou égale à moins 50 °C.

2. Revêtement de sol selon la revendication 1, **caractérisé en ce que** les groupes acide et/ou les groupes anhydride du polymère du composant B sont greffés sur le polymère.

3. Revêtement de sol selon l'une des revendications 1 à 2, **caractérisé en ce que** l'élastomère thermoplastique à base de styrène comprend un monomère isoprène incorporé dans la chaîne polymère sous forme d'isomère 1,2-vinylique.

4. Revêtement de sol selon l'une des revendications 1 à 3, **caractérisé en ce que** l'élastomère thermoplastique à base de styrène présente une teneur en styrène entre 15 % en poids et 80 % en poids.

5. Revêtement de sol selon l'une des revendications 1 à 4, **caractérisé en ce que** l'élastomère thermoplastique à base de styrène comprend au moins un composé sélectionné parmi le groupe constitué par le copolymère en bloc styrène-butadiène-styrène (SBS), le copolymère en block styrène-isoprène-styrène (SIS), le copolymère en bloc styrène-éthylène-butylène-styrène (SEBS), et le copolymère en bloc styrène-éthylène-propylène-styrène (SEPS).

6. Revêtement de sol selon l'une des revendications 1 à 5, **caractérisé en ce que** l'élastomère thermoplastique à base de styrène comprend un copolymère en bloc.

7. Revêtement de sol selon la revendication 5, **caractérisé en ce que** l'élastomère thermoplastique à base de styrène comprend une partie d'un copolymère dibloc.

8. Revêtement de sol selon l'une des revendications 1 à 7, **caractérisé en ce que** l'élastomère thermoplastique à base de styrène présente une structure triséquencée S-X-S, dans lequel S est un bloc de styrène et X est un bloc dotée de propriétés élastomères à 20 °C.

9. Revêtement de sol selon l'une des revendications 1 à 8, **caractérisé en ce que** le composant A contient au moins un polymère à base d'oléfine, lequel est sélectionné parmi le groupe constitué par l'éthylène-acétate de vinyle (EVA), l'éthylène-acide méthacrylique (EMA), l'éthylène-acrylate de butyle (EBA), l'éthylène-acrylate d'éthyle (EEA), le copolymère éthylène-propylène (EPM), le polyéthylène très basse densité (VLDPE), le polyéthylène linéaire de basse densité (LLDPE), l'élastomère polyoléfine (POE), le polyéthylène (PE), le polypropylène (PP), le polyéthylène de basse densité (LDPE), et la polyoléfine plastomère (POP).

10. Revêtement de sol selon l'une des revendications 1 à 9, **caractérisé en ce que** le polymère compris par le composant B comprend des groupes anhydride maléique et/ou groupes acide acrylique.

11. Revêtement de sol selon l'une des revendications 1 à 10, **caractérisé en ce que** le composant B comprend un polymère qui coïncide avec le polymère à base d'oléfine de du composant A et/ou avec l'élastomère thermoplastique à base de styrène du composant C.

12. Revêtement de sol selon l'une des revendications 2 à 11, **caractérisé en ce que** pour le composant B les groupes acide et/ou les groupes anhydride greffés sur le polymère représentent plus de 1 % en poids du composant B.

13. Procédé de production d'un revêtement de sol selon l'une des revendications 1 à 12 avec les étapes suivantes :
- préparation d'un composant A, d'un composant B et d'un composant C, dans lequel le composant A comprend un polymère à base d'oléfine, dans lequel le composant B comprend un polymère comprenant des groupes acide et/ou des groupes anhydride, dans lequel le composant C comprend un élastomère thermoplastique à base de styrène, dans lequel l'élastomère thermoplastique à base de styrène présente une phase dure et une phase molle et dans lequel la phase molle présente une température de transition vitreuse T_{G}, qui est supérieure ou égale à moins 50 °C ;
- production d'une composition de polymères par mélange du composant A, du composant B et du composant C dans un mélangeur ;
- mise en forme de la composition de polymères en une structure plate.

14. Procédé selon la revendication 13, **caractérisé en ce que** le composant A représente entre 10 et 85 parties en poids par rapport à la somme des composants A, B et C dans la composition de polymères et/ou le composant B représente entre 1 et 40 parties en poids par rapport à la somme des composants A, B et C dans la composition de polymères de la composition de polymères et/ou le composant C représente entre 10 et 85 parties en poids par rapport à la somme des composants A, B et C dans la composition de polymères de la composition de polymères.
